# EUROPEAN PATENT APPLICATION

(11) **EP 3 412 808 A1**
(43) Date of publication of application: **12.12.2018**
(21) Application number: 17747390.7
(22) Date of filing: 31.01.2017
(51) Int. Cl.: D02G 3/16, C01B 32/158

(54) **CARBON NANOTUBE TWISTED YARN PRODUCTION METHOD AND CARBON NANOTUBE TWISTED YARN**

(30) Priority: 04.02.2016 JP 2016019611
(71) Applicant: Hitachi Zosen Corporation, Osaka-shi, Osaka 559-8559 (JP)
(72) Inventor: FUJIMOTO, Norifumi, Osaka-shi Osaka 559-8559 (JP); INOUE, Tetsuya, Osaka-shi Osaka 559-8559 (JP)
(74) Representative: Grünecker Patent- und Rechtsanwälte PartG mbB
(86) International application number: PCT/JP2017/003360
(87) International publication number: WO 2017/135234

(57) **Abstract**

The method for producing a carbon nanotube twisted yarn includes preparing a vertically-aligned carbon nanotube that is disposed on a substrate and is aligned vertically to the substrate; drawing a plurality of carbon nanotube single yarns from the vertically-aligned carbon nanotube, and arranging the plurality of carbon nanotube single yarns in parallel to prepare a carbon nanotube web; forming a laminate by stacking the carbon nanotube web in a plural number so that the plurality of carbon nanotube single yarns are extended is in parallel; and twisting the laminate.

## Description

### [TECHNICAL FIELD]

The present invention relates to a method for producing a carbon nanotube twisted yarn and a carbon nanotube twisted yarn.

### [BACKGROUND ART]

A carbon nanotube is known to have an excellent mechanical strength, thermal conductivity, and electric conductivity. Carbon nanotube yarns formed of a plurality of carbon nanotubes have been studied as a raw material for various industrial products.

For such a method for producing a carbon nanotube yarn, for example, Patent Document 1 has proposed a method for producing a nanofiber twisted yarn. In the method, a nanotube sheet of continuous carbon nanotube is taken out from a nanotube forest grown on a substrate, and twisting the nanotube sheet (for example, see Patent Document 1 below).

### [Citation List]

### [Patent Document]

### [Patent Document 1]

Japanese Unexamined Patent Application Publication (Translation of PCT Application) 2008-523254

### [SUMMARY OF THE INVENTION]

### [PROBLEM TO BE SOLVED BY THE INVENTION]

However, with the method for producing a nanofiber twisted yarn described in Patent Document 1, improvement in density of the nanofiber twisted yarn is limited. Therefore, with such a nanofiber twisted yarn, mechanical strength, thermal conductivity, and electrical conductivity suitable for application may not be sufficiently ensured.

An object of the present invention is to provide a method for producing a carbon nanotube twisted yarn with which the density can be improved, and a carbon nanotube twisted yarn.

### [MEANS FOR SOLVING THE PROBLEM]

The present invention [1] includes a method for producing a carbon nanotube twisted yarn, the method including the steps of: preparing a vertically-aligned carbon nanotube that is disposed on a substrate and is aligned vertically to the substrate; drawing a plurality of carbon nanotube single yarns from the vertically-aligned carbon nanotube, and arranging the plurality of carbon nanotube single yarns in parallel to prepare a carbon nanotube web; forming a laminate by stacking the carbon nanotube web in a plural number so that the plurality of carbon nanotube single yarns are extended in parallel; and twisting the laminate.

With this method, the carbon nanotube twisted yarn is produced by twisting the laminate, in which the plurality of carbon nanotube webs are stacked, and therefore compared with the case where it is produced by twisting one carbon nanotube web, density of the carbon nanotube twisted yarn can be improved. Therefore, characteristics such as mechanical strength, thermal conductivity, and electrical conductivity of the carbon nanotube twisted yarn can be improved.

The present invention [2] includes a method for producing a carbon nanotube twisted yarn of [1] above, wherein in the step of stacking the carbon nanotube web, the carbon nanotube web is wound around a circumferential face of a roller a plurality of times, and the carbon nanotube web wound around was cut in the axial direction of the roller to separate the laminate from the roller.

With this method, the carbon nanotube web is wound around the circumferential face of the roller a plurality of times, and therefore the carbon nanotube web can be smoothly stacked onto the roller in diameter direction a plurality of times. Then, the carbon nanotube web wound around is cut in the axial direction of the roller, to separate the laminate from the roller. Therefore, with an easy method, the laminate can be formed smoothly, and also production efficiency of the carbon nanotube twisted yarn can be improved.

The present invention [3] includes the method for producing a carbon nanotube twisted yarn of [1] or [2] above, further including a step of supplying a volatile liquid to the laminate before twisting the laminate.

With this method, after supplying the volatile liquid to the laminate, the volatile liquid is vaporized, which allows the stacked plurality of carbon nanotube webs are densified to each other in the stacking direction, and in the carbon nanotube web, the plurality of carbon nanotubes are densified to each other. Therefore, density of the laminate can be improved.

The present invention [4] includes the method for producing a carbon nanotube twisted yarn of [3] above, wherein fine particles are disposed or metal salt and/or resin material is dissolved in the liquid.

With this method, fine particles are dispersed or metal salt and/or resin material is dissolved in the liquid, and therefore when the liquid is supplied to the laminate, fine particles, metal salt, or resin material can be attached to the plurality of carbon nanotubes. Therefore, characteristics of fine particles, metal salt and/or resin material can be given to the carbon nanotube twisted yarn formed from the laminate.

The present invention [5] includes the method for producing a carbon nanotube twisted yarn of any one of [1] to [4] above, further including a step of pressing the laminate in the stacking direction of the carbon nanotube web before twisting the laminate.

With this method, the laminate is pressed in the stacking direction, and therefore density of the laminate can be further improved.

The present invention [6] includes a carbon nanotube twisted yarn including a twisted laminate, wherein the twisted laminate has stacked carbon nanotube webs, and each of the carbon nanotube webs has a plurality of carbon nanotube single yarns which are arranged in parallel.

With such a configuration, the carbon nanotube twisted yarn is formed by twisting the laminate in which the plurality of carbon nanotube webs are stacked, and therefore density of the carbon nanotube twisted yarn can be reliably improved.

### [EFFECTS OF THE INVENTION]

With the method for producing a carbon nanotube twisted yarn of the present invention, density of the carbon nanotube twisted yarn can be improved.

With the carbon nanotube twisted yarn of the present invention, density is improved, and characteristics such as mechanical strength, thermal conductivity, and electrical conductivity can be improved.

### [BRIEF DESCRIPTION OF THE DRAWINGS]

[FIG. 1] FIG. 1A is a diagram illustrating an embodiment of production processes of the carbon nanotube twisted yarn (CNT twisted yarn) of the present invention, showing a step of forming a catalyst layer on a substrate. Following Fig. 1A, Fig. 1B shows a step of heating the substrate and having the catalyst layer aggregate into a plurality of granular bodies. Following FIG. 1B,
FIG. 1C shows a step of supplying a source gas to the plurality of granular bodies, to allow the vertically-aligned carbon nanotube (VACNTs) to grow. Following FIG. 1C, FIG. 1D shows a step of drawing the carbon nanotube web (CNT web) from the VACNTs.
[FIG. 2] Following FIG. 1D, FIG. 2 shows a step of stacking the drawn CNT web on the roller.
[FIG. 3] Following FIG. 2, FIG. 3A shows a step of supplying the volatile liquid to the CNT laminate produced by stacking the CNT web and pressing. Following FIG. 3A, FIG. 3B shows a step of unwinding the CNT laminate to remove from the roller. Following FIG. 3B, FIG. 3C shows a step of cutting the CNT laminate.
[FIG. 4] Following FIG. 3C, FIG. 4A shows a state where twisting of the CNT laminate has started. Following FIG. 4A, FIG. 4B shows a state in the middle of twisting of the CNT laminate. FIG. 4C shows, a state where twisting of the CNT laminate is completed.
[FIG. 5] FIG. 5A is a diagram illustrating another embodiment of production processes of the carbon nanotube twisted yarn of the present invention (embodiment in which the CNT web is stacked one by one), showing a step of stacking the plurality of CNT webs to produce the CNT laminate. Following FIG. 5A, FIG. 5B shows a step of pressing the CNT laminate.
[FIG. 6] FIG. 6A shows a scanning electron microscope (SEM) image of the carbon nanotube twisted yarn (CNT twisted yarn) of Example 1. FIG. 6B shows an enlarged SEM image of the CNT twisted yarn shown in FIG. 6A.
[FIG. 7] FIG. 7A shows a scanning electron microscope (SEM) image of the CNT twisted yarn of Comparative Example 1. FIG. 7B shows an enlarged SEM image of the CNT twisted yarn shown in FIG. 7A.

### [DESCRIPTION OF EMBODIMENTS]

In an embodiment of the method for producing a carbon nanotube twisted yarn of the present invention, the plurality of carbon nanotube webs are stacked into a laminate, and the laminate is twisted to produce a carbon nanotube twisted yarn.

### (First embodiment)

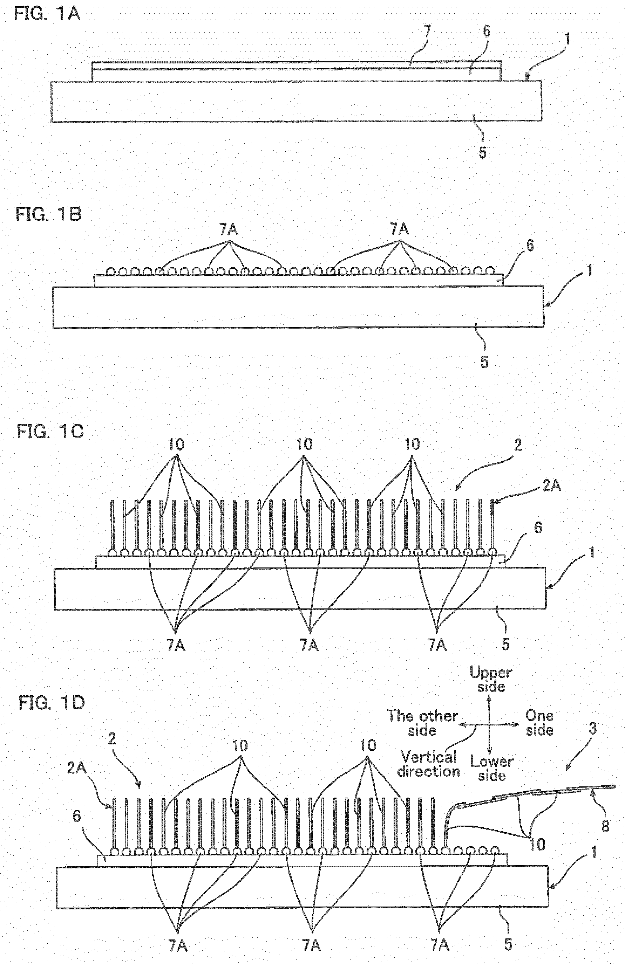

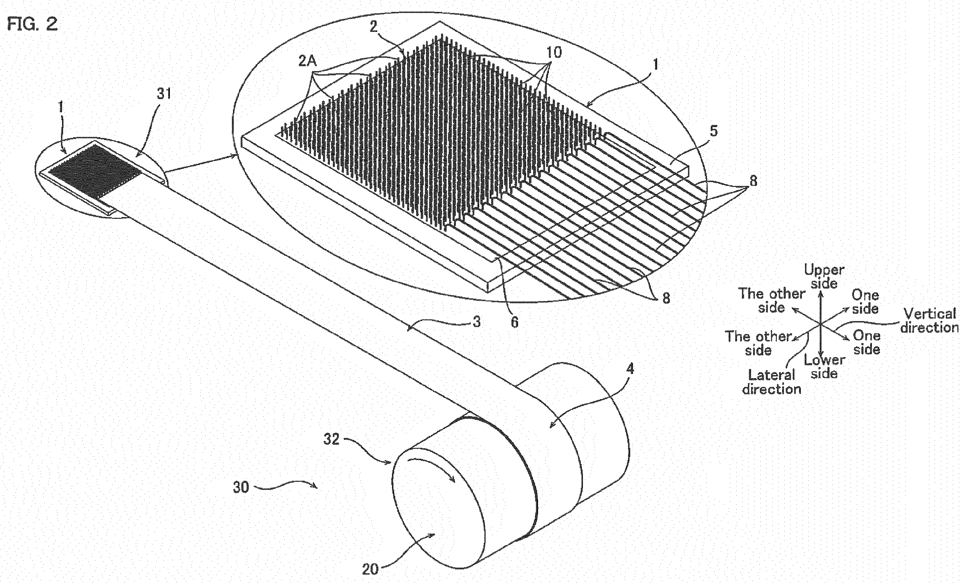

An embodiment of the method for producing a carbon nanotube twisted yarn of the present invention is described with reference to FIG. 1 to FIG. 4. An embodiment of the method for producing a carbon nanotube twisted yarn includes the steps of: for example, as shown in FIG. 2 to FIG. 4C, preparing vertically-aligned carbon nanotubes 2 (hereinafter referred to as VACNTs 2) disposed on a substrate 1; drawing a carbon nanotube web 3 (in the following, referred to as CNT web 3) from the VACNTs 2; stacking the plurality of CNT webs 3 to form a CNT laminate 4 as a laminate; and twisting the CNT laminate 4.

In this production method, for example, as shown in FIG. 1A to FIG. 1D, the VACNTs 2 are allowed to grow on the substrate 1 by chemical vapor deposition method (CVD method) to prepare the VACNTs 2 disposed on the substrate 1 (preparation step).

To be specific, as shown in FIG. 1A, first, the substrate 1 is prepared. The substrate 1 is not particularly limited, and for example, a known substrate used for the CVD method is used, and a commercially available product can be used.

Examples of the substrate 1 include a silicon substrate, and a stainless steel substrate 5 on which a silicon dioxide film 6 is stacked, and preferably, a stainless steel substrate 5 on which the silicon dioxide film 6 is stacked is used. FIG. 1A to FIG. 1D and FIG. 2 show a case where the substrate 1 is the stainless steel substrate 5 on which the silicon dioxide film 6 is stacked.

Then, as shown in FIG. 1A, a catalyst layer 7 is formed on the substrate 1, preferably on the silicon dioxide film 6. To form the catalyst layer 7 on the substrate 1, a metal catalyst is formed on the substrate 1 (preferably, silicon dioxide film 6) by a known film-forming method.

Examples of the metal catalyst include iron, cobalt, and nickel, and preferably, iron is used. Such a metal catalyst may be used singly, or a plurality of kinds of metal catalysts may be used together. Examples of the film-forming method include vacuum deposition and sputtering, and preferably, vacuum deposition is used.

The catalyst layer 7 is disposed on the substrate 1 in this manner. When the substrate 1 is a stainless steel substrate 5 on which a silicon dioxide film 6 is stacked, the silicon dioxide film 6 and the catalyst layer 7 can be formed simultaneously, for example, as described in Japanese Unexamined Patent Publication No. 2014-94856, by applying a mixture solution in which silicon dioxide precursor solution and a metal catalyst precursor solution are mixed on the stainless steel substrate 5, and then the mixture liquid is allowed to go through phase separation, and then drying.

Then, the substrate 1 on which the catalyst layer 7 is disposed is heated, as shown in FIG. 1B, for example, at 700°C or more and 900°C or less. In this manner, the catalyst layer 7 coagulated to form a plurality of granular bodies 7A.

Then, a source gas is supplied to the heated substrate 1, as shown in FIG. 1C. The source gas contains hydrocarbon gas with a carbon number of 1 to 4 (lower hydrocarbon gas). Examples of hydrocarbon gas having 1 to 4 carbon atoms include methane gas, ethane gas, propane gas, butane gas, ethylene gas, and acetylene gas, and preferably, acetylene gas is used.

In addition, the source gas may contain hydrogen gas, inert gas (for example, helium, argon, etc.), water vapor, and the like, if necessary.

The supply time of the source gas may be, for example, 1 minute or more, preferably 5 minutes or more, and for example, 60 minutes or less, or preferably 30 minutes or less.

In this manner, plurality of carbon nanotubes 10 (in the following, referred to as CNT 10) are grown from the plurality of granular bodies 7A. For convenience, FIG. 1C shows one CNT 10 grown from one granular body 7A, but it is not limited thereto, and a plurality of CNTs 10 can be grown from one granular body 7A.

The plurality of CNTs 10 can be any of the single-walled carbon nanotube and multi-walled carbon nanotube, and preferably, the plurality of CNTs 10 are multi-walled carbon nanotube. The plurality of CNTs 10 can include only one of the single-walled carbon nanotube and multi-walled carbon nanotube, or can include both of the single-walled carbon nanotube and multi-walled carbon nanotube.

The CNTs 10 have an average external diameter of, for example, 1nm or more, preferably 5nm or more, and for example, 100 nm or less, preferably 50 nm or less, more preferably 20 nm or less.

The CNTs 10 have an average length (average axial direction size) of, for example, 1 µm or more, preferably 100 µm or more, more preferably 200 µm or more, and for example, 1000 µm or less, preferably 500 µm or less, more preferably 400 µm or less. The number of the layers, average external diameter, and average length of the CNTs 10 are measured by known methods such as Raman spectroscopic analysis and electron microscope observation.

The plurality of CNTs 10 extend in the thickness direction of the substrate 1 so as to be substantially parallel to each other on the substrate 1. The VACNTs 2 composed of the plurality of CNTs 10 are grown on the substrate 1 in this manner.

That is, the plurality of CNTs 10 are aligned (vertically aligned) in a direction orthogonal to the substrate 1, and the VACNTs 2 are vertically aligned relative to the substrate 1.

The VACNTs 2 disposed on the substrate 1 are prepared in this manner.

As shown in FIG. 2, the VACNTs 2 have a substantially rectangular shape extending in surface direction (vertical direction and lateral direction) orthogonal to the thickness direction (up-down direction) of the substrate 1 in plan view. The VACNTs 2 have a plurality of rows 2A in lateral direction, in which the plurality of CNTs 10 are arranged in line in vertical direction. In the VACNTs 2, the plurality of CNTs 10 are densified in the surface direction (vertical direction and lateral direction).

In the VACNTs 2, the plurality of CNTs 10 have a bulk density of, for example, 10 mg/cm³ or more, preferably 20 mg/cm³ or more, and for example, 60 mg/cm³ or less, preferably 50 mg/cm³ or less. The bulk density of the CNT 10 is calculated from, for example, the mass per unit area (weight per unit area: mg/cm²) and the length of the carbon nanotubes (which is measured by SEM (from JEOL Corporation) or by a non-contact film thickness meter (from KEYENCE Corporation)).

Then, as shown in FIG. 1D, the CNT web 3 is drawn out from the VACNTs 2 (drawing step).

To draw the CNT web 3 from the VACNTs 2, as shown in FIG. 2, in the VACNTs 2, the CNT 10 positioned at one side end portion of the row 2A in the vertical direction is collectively held by a drawing device, which is not shown, and pulled along a direction which intersects (crossing) the thickness direction of the substrate 1, preferably, along the vertical direction.

Then, the pulled CNT 10 is drawn out from the corresponding granular body 7A, as shown in FIG. 1D. At this time, the end (lower end) of the CNT 10 adjacent in vertical direction to drawn CNT 10 is attached to the end (lower end) of the drawn CNT 10 by the frictional force with the drawn CNT 10, Van der Waals force, etc., and drawn from the corresponding granular body 7A.

At this time, the CNT 10 having one end (lower end) attached to the CNT 10 is pulled downstream by its one end (lower end) in drawing direction, and the other end (upper end) of the CNT 10 is tilted upstream in drawing direction, to attach to the other end (upper end) of the adjacent CNT 10.

Then, the CNT 10 to which the CNT 10 is attached to the other end (upper end) is pulled downstream by the other end (upper end) in drawing direction, thereby drawing out one end (lower end) from the corresponding granular body 7A, and attaching to the one end (lower end) of the adjacent CNT 10.

Accordingly, the plurality of CNTs 10 are successively and continuously drawn from the VACNTs 2, to thereby form carbon nanotube single yarn 8 (in the following, referred to as CNT single yarn 8) in which the plurality of CNTs 10 are connected linearly and continuously.

To be more specific, in the CNT single yarn 8, the continuous CNT 10 are attached to each other by one ends (lower end) or the other ends (upper end) of the CNT 10, and are aligned along the direction the CNT single yarn 8 extend. FIG. 1D shows, for convenience, one CNT 10 continuously connected to form the CNT single yarn 8, but actually, the bundle of the plurality of CNTs 10 is connected continuously to form the CNT single yarn 8.

Such a CNT single yarn 8 is a non twisted yarn, which is not twisted, and the twist angle is substantially 0°. The CNT single yarn 8 has an external diameter of, for example, 5 nm or more, preferably 8 nm or more, and for example, 100 nm or less, preferably 80 nm or less, more preferably 50 nm or less.

As shown in the enlarged view in FIG. 2, the plurality of CNT single yarns 8 are arranged in parallel in a direction intersecting (crossing) the direction the CNT single yarn 8 extends, because the CNT 10 in each row 2A is drawn at once simultaneously and in parallel.

To be specific, the plurality of CNT single yarns 8 extend along the vertical direction, and are arranged in parallel in lateral direction. In this manner, the plurality of CNT single yarns 8 arranged in parallel has substantially a sheet shape, and formed as a CNT web 3. That is, the CNT web 3 is formed by drawing the plurality of CNT single yarns 8 to be arranged in parallel.

The CNT web 3 has a lateral length of, for example, 0.5 mm or more, preferably 1cm or more, and for example, 500cm or less, preferably 100cm or less.

Then, the plurality of CNT webs 3 are stacked to form the CNT laminate 4 (stacking step).

To stack the plurality of CNT webs 3, in this embodiment, as shown in FIG. 2, first, the roller 20 is prepared.

The roller 20 has a cylinder shape extending in lateral direction, and is capable of rotation around the axis as the center of rotation. On the circumferential face of the roller 20, preferably, a resin film is provided.

The roller 20 has an external diameter of, for example, 1cm or more, preferably 3cm or more, for example, 500cm or less, preferably 100cm or less. The roller 20 has a lateral direction (axial direction) size of, for example, 3 cm or more, preferably 5 cm or more, and for example, 500 cm or less, preferably 100 cm or less.

Then, the downstream end portion in drawing direction of the CNT web 3 is fixed on the circumferential face of the roller 20, and the roller 20 is rotated.

In this manner, the CNT web 3 is drawn out from one sheet of VACNTs 2 continuously, wound around the circumferential face of the roller 20 a plurality of times, and stacked in a plural number in diameter direction of the roller 20.

The moving speed of the drawn CNT web 3 is, for example, 0.01 m/min or more, preferably 0.1 m/min or more, and for example, 200 m/min or less, preferably 100 m/min or less.

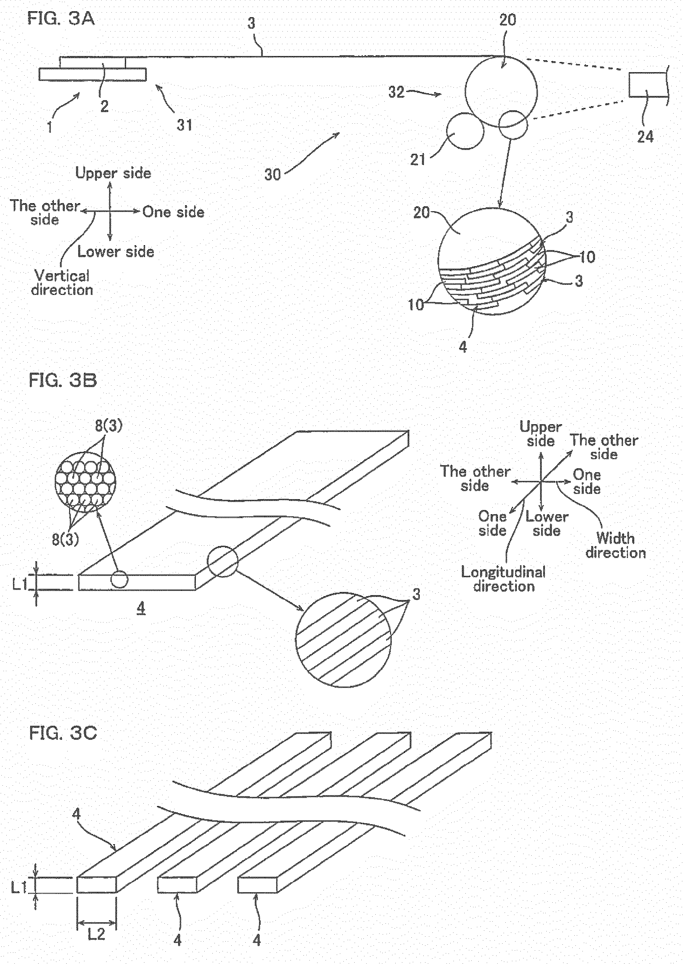

In the stacked CNT web 3, the plurality of CNT single yarns 8 extend, as shown in FIG. 3A, along the circumferential direction of the roller 20. That is, the plurality of CNT web 3 are stacked so that the plurality of CNT single yarns 8 are extended in parallel.

The CNT web 3 is wound around for a number of (stack number), for example, 5 or more, preferably 10 or more, more preferably 50 or more, particularly preferably 100 or more, and for example, 2000 or less, preferably 500 or less, more preferably 300 or less, particularly preferably 150 or less.

In the above-described manner, the plurality of CNT webs 3 are stacked to form the CNT laminate 4.

The CNT laminate 4 wound around the roller 20 is cut in the axial direction of the roller 20 by a cutting blade (for example, razor, cutter, etc.), unwound, and removed from the roller 20. It can be used as is for production of the carbon nanotube twisted yarn 100 (described later), but in view of improving characteristics of the carbon nanotube twisted yarn 100 (described later), preferably, it is densified (densification step).

Examples of the densification include supplying a volatile liquid to the CNT laminate 4, and applying pressure to the CNT laminate 4.

In this embodiment, after completing winding of the CNT laminate 4 to the roller 20, the volatile liquid is supplied while the CNT laminate 4 is wound around the roller 20, and then pressure is applied, as described. That is, the method for producing a carbon nanotube twisted yarn in this embodiment includes a step of supplying the volatile liquid to the CNT laminate 4 (liquid supply step), and a step of pressing the CNT laminate 4 (pressing step). These steps are performed before the twisting step described later.

In the densification of this embodiment, first, while rotating the roller 20, the volatile liquid is supplied by a spraying device 24 to the CNT laminate 4 wound around the roller 20.

The spraying device 24 is a known spraying device, and is disposed in spaced apart relation from the roller 20. The spraying device 24 is configured to spray the volatile liquid to the CNT laminate 4 wound around the roller 20.

The volatile liquid may be, for example, water, an organic solvent, etc., and an organic solvent is preferable. The organic solvent may be, for example, a lower (C1-C3) alcohol (for example, methanol, ethanol, propanol, etc.), a ketone (for example, acetone, etc.), an ether (for example, diethylether, tetrahydrofuran, etc.), an alkyl ester (for example, ethyl acetate, etc.), a halogenated aliphatic hydrocarbon (for example, chloroform, dichloromethane, etc.), and a non-polar proton (for example, N-methylpyrolidone, dimethylformamide, etc.).

Among such volatile liquids, a lower alcohol is preferable, and ethanol is more preferable. One kind of such volatile liquids may be used singly, or a plurality of kinds may be used together.

Preferably, fine particles can be dispersed, or a metal salt and/or resin material can be dissolved in the volatile liquid.

The fine particles may be particles having an average primary particle diameter of, for example, 0.001 µm or more, preferably 0.01 µm or more, and for example, 100 µm or less, preferably 50 µm or less. Examples of the fine particles include organic fine particles and inorganic fine particles.

The organic fine particles may be, for example, silicone fine particles, acrylic fine particles, etc.

The inorganic fine particles may be, for example, carbon fine particles, metal fine particles (for example, aluminum, titanium, chromium, iron, cobalt, nickel, copper, zinc, silver, tin, platinum, gold, rhodium, palladium, an alloy containing them, etc.), etc.

Among such fine particles, inorganic fine particles are preferable, and carbon fine particles are more preferable. One kind of such fine particles may be used singly, or a plurality of kinds of them may be used together.

For the metal salt, for example, nitrate, sulfate, chloride, hydroxide of the above-described metals, and preferably, nitrate, more preferably, cobalt nitrate (Co(NO₃)₂) is used. These metal salts can be used singly, or can be used in combination of two or more.

Examples of the resin material include thermoplastic resin (for example, polyester resin, polycarbonate resin, fluorine resin, etc.), and thermosetting resin (for example, silicone resin, epoxy resin, urethane resin, etc.). A conductive polymer, such as polyaniline and polypyrrole, may also be used as the resin material. Fine particles can be dispersed, and the metal salt and/or resin material can be dissolved in the volatile liquid.

In this manner, a volatile liquid is homogenously attached to the CNT laminate 4 on the roller 20. When particles are dispersed in the volatile liquid, fine particles are attached to the CNT laminate 4, and when the metal salt and/or resin material are dissolved in the volatile liquid, metal salt and/or resin material are attached to the CNT laminate 4.

Thereafter, by volatilizing the volatile liquid, the stacked CNT webs 3 are densified in stacking direction (diameter direction of the roller 20), and the plurality of CNTs 10 are densified in the CNT single yarn 8. Therefore, density of the CNT laminate 4 improves.

Then, the laminate 4 to which the liquid was supplied is pressed with a pressure roller 21.

The pressure roller 21 has a substantially cylindrical shape extending along the roller 20, and is capable of rotation around its axis as the center of rotation. The pressure roller 21 is disposed in spaced apart relation from the spraying device 24 at a downstream side in the rotation direction of the roller 20, and is disposed to face the roller 20 in diameter direction so as to sandwich the CNT laminate 4 with the roller 20. The pressure roller 21 is movable along the diameter direction of the roller 20.

The pressure roller 21 has an external diameter that is smaller than the external diameter of the roller 20, and for example, the external diameter is 1cm or more, preferably 3cm or more, and for example, 100cm or less, preferably 50cm or less. The pressure roller 21 has an axial direction length that is longer than the axial direction length of the roller 20, and for example, it is 3 cm or more, preferably 5 cm or more, and for example, 500 cm or less, preferably 100 cm or less. The pressure roller 21 rotates by following rotation of the roller 20.

Then, the CNT laminate 4 to which the liquid is supplied reaches between the roller 20 and the pressure roller 21 along with rotation of the roller 20. At this time, the pressure roller 21 presses the CNT laminate 4 in the diameter direction (that is, stacking direction of the CNT laminate 4) of the roller 20.

The pressure of the pressure roller 21 to the CNT laminate 4 is, for example, 10kg/cm² or more, preferably 100kg/cm² or more, and for example, 1000kg/cm² or less, preferably 500kg/cm² or less.

In the above-described manner, the volatile liquid is supplied to the CNT laminate 4 wound around the roller 20 along the entire circumferential direction of the roller 20, and a pressure is applied, thereby completing densification of the CNT laminate 4. Thereafter, the CNT laminate 4 is dried as necessary.

Then, the CNT laminate 4 wound around the roller 20 is cut in the axial direction of the roller 20 by a cutting blade as described above, and unwound to remove from the roller 20. In this manner, the as shown in FIG. 3B, a sheet shaped CNT laminate 4 is formed. The CNT laminate 4 is composed of the plurality of CNT webs 3 stacked in thickness direction, and preferably has a flat belt shape. That is, the thickness direction of the CNT laminate 4 is the same as the stacking direction of the plurality of CNT webs 3. The longitudinal direction of the CNT laminate 4 is along the direction of extension of the CNT single yarn 8 in the CNT web 3, and the longitudinal direction of the CNT laminate 4 is the same as the direction of extension of the CNT single yarn 8. The width direction of the CNT laminate 4 is the direction orthogonal to both directions of the following: the stacking direction of the plurality of CNT webs 3 and extension direction of the CNT single yarn 8.

In the CNT laminate 4, the CNT webs 3 are stacked for a number of, for example, 5 layers or more, preferably 10 layers or more, more preferably 50 layers or more, particularly preferably 100 layers or more, and for example, 2000 layers or less, preferably 400 layers or less, more preferably 300 layers or less, particularly preferably 150 layers or less.

When the number of the CNT web 3 stacked is the above lower limit or more, improvement in handleability of the CNT laminate 4 can be reliably ensured, and when the number of the CNT web 3 stacked is the above upper limit or less, density of the carbon nanotube twisted yarn 100 (described later) can be reliably improved.

The CNT laminate 4 has a thickness L1 (stacking direction of CNT web 3) of, for example, 0.5 µm or more, preferably 1 µm or more, more preferably 2 µm or more, and for example, 100 µm or less, preferably 50 µm or less, more preferably 30 µm or less, particularly preferably 10 µm or less.

Then, the CNT laminate 4 is cut as necessary, as shown in FIG. 3C, so that the width direction length L2 is within the predetermined range. In this case, the CNT laminate 4 is cut by the above-described cutting blade along the direction (longitudinal direction of CNT laminate 4) of extension of the CNT single yarn 8 into a plurality of number.

The CNT laminate 4 has a width direction length L2 of, for example, 0.05 cm or more, preferably 0.1 cm or more, more preferably 0.5 cm or more, and for example, 10 cm or less, preferably 5 cm or less, more preferably 1 cm or less.

The ratio of the length L2 in width direction (orthogonal direction) of the CNT laminate 4 relative to the thickness L1 of the CNT laminate 4 (stacking length of CNT web 3) (width direction length L2 of CNT laminate 4/ thickness L1 of CNT laminate 4) is, for example, 5 or more, preferably 10 or more, more preferably 100 or more, particularly preferably 4000 or more, especially preferably 5000 or more, and for example, 10⁵ or less, preferably 50000 or less, more preferably 40000 or less, particularly preferably 30000 or less.

When the ratio of the width direction length L2 of the CNT laminate 4 relative to the thickness L1 of the CNT laminate 4 is the lower limit or more, handleability of the CNT laminate 4 can be improved, and when the ratio of the width direction length L2 of the CNT laminate 4 relative to the thickness L1 of the CNT laminate 4 is the upper limit or less, density of the carbon nanotube twisted yarn 100 (described later) formed by twisting the CNT laminate 4 can be improved.

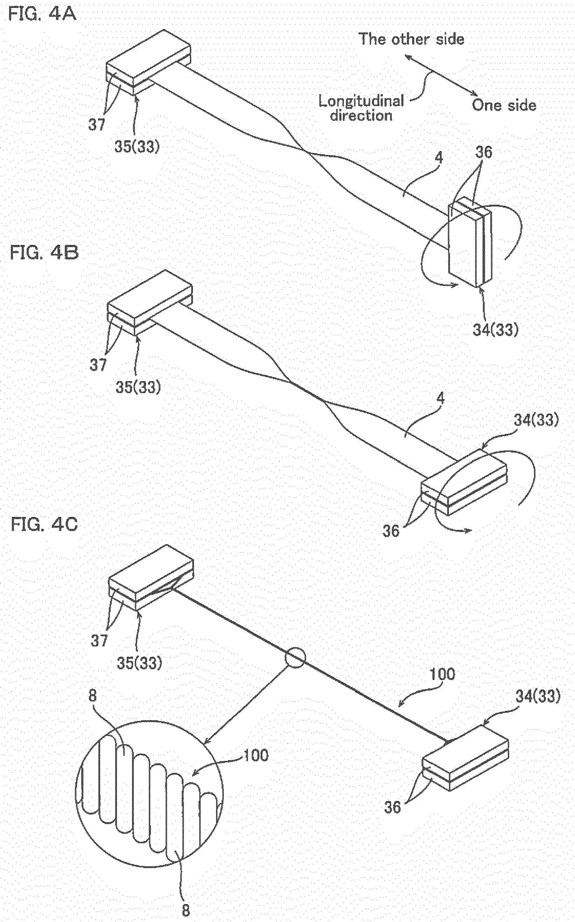

Then, as shown in FIG. 4A to FIG. 4C, the CNT laminate 4 is twisted to produce the carbon nanotube twisted yarn 100 (in the following, referred to as CNT twisted yarn 100) (twisting step).

To twist the CNT laminate 4, first, as shown in FIG. 4A, both ends portion in longitudinal direction of the CNT laminate 4 (extension direction of the plurality of CNT single yarns 8) are held. Then, as shown in FIG. 4B, while fixing the other side end portion of the CNT laminate 4, one side end portion of the CNT laminate 4 is rotated about the phantom line along the longitudinal direction of the CNT laminate 4 as the center of rotation.

The one side end portion of the CNT laminate 4 is rotated at a speed of, for example, 10 rpm or more, preferably 50 rpm or more, and for example, 1000 rpm or less, preferably 100 rpm or less. The one side end portion of the CNT laminate 4 is rotated for, for example, 0.2 minutes or more, preferably 0.5 minutes or more, and for example, 100 minutes or less, preferably 10 minutes or less.

In this manner, as shown in FIG. 4C, the CNT laminate 4 is twisted, and the plurality of CNT single yarns 8 of the CNT laminate 4 are twisted, to produce the CNT twisted yarn 100. That is, the CNT twisted yarn 100 is formed by twisting the CNT laminate 4 so that the plurality of CNT single yarns 8 are twisted: in the CNT laminate 4, the plurality of CNT webs 3 are stacked, and in the CNT web, the plurality of CNT single yarns 8 are arranged in parallel.

Thereafter, as necessary, both end portions in longitudinal direction of the CNT twisted yarn 100 that had been held were cut to be removed.

The CNT twisted yarn 100 is twisted for, for example, 100 T/m or more, preferably 500 T/m or more, and for example, 10000 T/m or less, preferably 5000 T/m or less.

The CNT twisted yarn 100 has an external diameter of, for example, 30 µm or more, preferably 80 µm or more, more preferably 100 µm or more, and for example, 1000 µm or less, preferably 200 µm or less.

The CNT twisted yarn 100 has a bulk density of, for example, 0.2g/cm³ or more, preferably 0.6g/cm³ or more, more preferably 1.0g/cm³ or more, and for example, 1.7g/cm³ or less, preferably 1.5g/cm³ or less, more preferably 1.4g/cm³ or less.

The CNT twisted yarn 100 has a tensile strength of, for example, 0.3 GPa or more, preferably 0.5 GPa or more, more preferably 0.8 GPa or more, particularly preferably 1.0 GPa or more, and for example, 3.0 GPa or less, preferably 2.0 GPa or less. The tensile strength is measured by the method described in Examples described later.

The CNT twisted yarn 100 has an electric resistance in extension direction of the CNT twisted yarn 100 of, for example, 0.1 mΩ·cm or more, preferably 0.3 πιΩ·cm or more, and for example, 5.0 mΩ·cm or less, preferably 3.0 mΩ·cm or less, more preferably 2.0 mΩ·cm or less, particularly preferably 1.0 mΩ·cm or less. The electric resistance is measured by the method described in Examples described later.

Such a CNT twisted yarn 100 is used for various industrial products such as a textile (sheet) for which a carbon fiber is used, and a conductive line material for electric apparatuses (for example, a motor, a transformer, and a sensor).

The method for producing the CNT twisted yarn 100 is conducted continuously, for example, as shown in FIG. 2 to FIG. 4C, by a twisted yarn production device 30. The twisted yarn production device 30 includes a feeder 31 (ref: FIG. 2), a stacking unit 32 (ref: FIG. 3A), and a twister 33 (ref: FIG. 4A). In description of the twisted yarn production device 30, the same members are given the same reference numerals, and descriptions thereof are omitted.

The feeder 31 is configured to, as shown in FIG. 2, supply the CNT web 3 to the stacking unit 32. The feeder 31 includes VACNTs 2 disposed on the substrate 1, and a drawing device, which is not shown.

The stacking unit 32 includes, as shown in FIG. 3A, a roller 20, a spraying device 24, a pressure roller 21, and a cutting blade, which is not shown. The roller 20 is disposed in spaced apart relation from the VACNTs 2, at one side in vertical direction. The spraying device 24 is disposed in spaced apart relation from the roller 20 at one side in vertical direction. The pressure roller 21 faces the roller 20, at the other side of the roller 20 relative to the vertical direction from an obliquely lower side.

The twister 33 includes, as shown in FIG. 4A, a first holder 34 and a second holder 35 disposed to face each other in spaced apart relation.

The first holder 34 includes two first plates 36. The two first plates 36 have a generally flat plate shape. The two first plates 36 are disposed so as to face each other in thickness direction. The first holder 34 is rotatable about the phantom line along the facing direction of the first holder 34 and the second holder 35 as the center of rotation.

The second holder 35 includes two second plates 37. The two second plates 37 have a generally flat plate shape. The two second plates 37 are disposed so as to face each other in thickness direction.

In the twisted yarn production device 30, as shown in FIG. 2, the drawing device, which is not shown, draws the CNTs 10 in the rows 2A of the VACNTs 2 simultaneously in parallel toward one side in vertical direction. In this manner, the CNT web 3 having a generally sheet shape and in which the plurality of CNT single yarns 8 are arranged in parallel in lateral direction is drawn from the VACNTs 2.

Then, as shown in FIG. 3A, the distal end of the CNT web 3 is fixed in circumferential face of the roller 20, and the roller 20 is rotated clockwise seen from the other side in lateral direction. At this time, the pressure roller 21 moves away to the outside in diameter direction of the roller 20, so as to part from the roller 20, and is disposed in spaced apart relation in the diameter direction of the roller 20. In this manner, the CNT web 3 is drawn from the VACNTs 2 continuously, and is wound around the circumferential face of the roller 20 a plurality of times to form the CNT laminate 4.

The CNT web 3 moves by rotation of the roller 20 at the speed of, for example, 0.1 m/min or more, preferably 5 m/min or more, and for example, 100 m/min or less, preferably 10 m/min or less.

Then, while rotating the roller 20, the volatile liquid is sprayed on the CNT laminate 4 by the spraying device 24, and the pressure roller 21 is moved toward the inner side in the diameter direction of the roller 20, and the CNT laminate 4 is sandwiched with the roller 20, to press the CNT laminate 4.

Then, the CNT laminate 4 wound around the roller 20 is cut along the axial direction of the roller 20 with the cutting blade, which is not shown, and removed from the roller 20. In this manner, as shown in FIG. 3B, the flat belt shaped CNT laminate 4 is formed. Thereafter, the flat belt shaped CNT laminate 4 is cut, as shown in FIG. 3C, with a cutting blade, which is not shown, so that the width direction length L2 is at a predetermined value, along the longitudinal direction of the CNT laminate 4.

Then, as shown in FIG. 4A and FIG. 4B, one side end portion of the CNT laminate 4 that was cut was sandwiched between two first plates 36 of the first holder 34, and the other side end portion of the CNT laminate 4 is sandwiched by two second plates 37 of the second holder 35. Then, the first holder 34 is rotated counterclockwise about the phantom line along the longitudinal direction of the CNT laminate 4 as the center of rotation seen from one side in longitudinal direction.

In this manner, the CNT laminate 4 is twisted so that the plurality of CNT single yarns 8 are twisted.

At this time, the range of rotation speed (revolution speed) of the first holder 34 is the same as the range of rotation speed of one side end portion of the above-described CNT laminate 4.

In the above-described manner, the CNT twisted yarn 100 is produced with the twisted yarn production device 30.

### (Operations and effects)

In this embodiment, the CNT twisted yarn 100 is produced by, as shown in FIG. 4A to FIG. 4C, twisting the CNT laminate 4, composed of the plurality of stacked CNT webs 3. Therefore, compared with the case where the CNT twisted yarn 100 is produced by twisting one sheet of CNT web 3, density of the CNT twisted yarn 100 can be improved. As a result, characteristics such as mechanical strength, thermal conductivity, and electrical conductivity of the CNT twisted yarn 100 can be improved.

The CNT web 3 is stacked in the diameter direction of the roller 20 to form the CNT laminate 4, by being wound around the circumferential face of the roller 20 a plurality of times, as shown in FIG. 2. Then, the CNT laminate 4 that was wound around was cut in the axial direction of the roller 20, to remove the CNT laminate 4 from the roller 20. Therefore, with an easy method, the CNT laminate 4 can be formed smoothly, and also production efficiency of the CNT twisted yarn 100 can be improved.

As shown in FIG. 3C, the width direction length L2 of the CNT laminate 4 relative to the thickness L1 of the CNT laminate 4 (width direction length L2/thickness L1) is 4000 or more. Therefore, handleability of the CNT laminate 4 can be improved, and the CNT laminate 4 can be easily twisted.

The width direction length L2 of the CNT laminate 4 relative to the thickness L1 of the CNT laminate 4 (width direction length L2/thickness L1) is 50000 or less. Therefore, density of the CNT twisted yarn 100 formed by twisting the CNT laminate 4 can be improved.

50 or more of the CNT web 3 is stacked. Therefore, handleability of the CNT laminate 4 can be reliably improved, and the CNT laminate 4 can be easily twisted.

400 or less of the CNT web 3 is stacked. Therefore, density of the CNT twisted yarn 100 formed by twisting the CNT laminate 4 can be reliably improved.

The volatile liquid is supplied to the CNT laminate 4, as shown in FIG. 3A. Therefore, the volatile liquid is vaporized to densify the plurality of CNT webs 3 stacked in the CNT laminate 4 in the stacking direction, and the plurality of CNTs 10 are densified in the CNT web 3. As a result, density of the CNT laminate 4 can be improved, and also density of the CNT twisted yarn 100 can be reliably improved.

Fine particles are dispersed, or metal salt and/or resin material are dissolved in the volatile liquid. Therefore, when the liquid is supplied to the CNT laminate 4, fine particles, metal salt, and resin material can be attached to the plurality of CNTs 10. As a result, characteristics of the fine particles, metal salt and/or resin material can be given to the CNT twisted yarn 100 formed from the CNT laminate 4.

The CNT laminate 4 is pressed in the stacking direction, as shown in FIG. 3A. Therefore, density of the CNT laminate 4 can be further improved, and also density of the CNT twisted yarn 100 can be improved even more reliably.

The CNT twisted yarn 100 is formed by, as shown in FIG. 4A to FIG. 4C, twisting the CNT laminate 4, in which the plurality of CNT webs 3 are stacked. Therefore, density of the CNT twisted yarn 100 can be improved.

The CNT twisted yarn 100 has a bulk density of 0.6g/cm³ or more, and therefore characteristics such as mechanical strength, thermal conductivity, and electrical conductivity of the CNT twisted yarn 100 can be improved. The CNT twisted yarn 100 has a bulk density of 1.7g/cm³ or less, and therefore the CNT twisted yarn 100 can be produced smoothly by the above method.

### (Modified example)

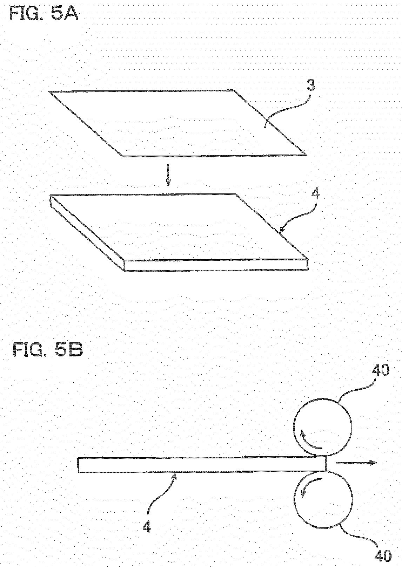

In the embodiment above, the CNT web 3 is stacked by winding the CNT web 3 around the circumferential face of the roller 20 a plurality of times, but the present invention is not limited to this, and as shown in FIG. 5A and FIG. 5B, a plurality of CNT webs 3 can be prepared, and these CNT webs 3 can be stacked in thickness direction to form the CNT laminate 4. In this case, the CNT laminate 4 is pressed in stacking direction by going through the pair of pressure rollers 40 facing each other.

In the embodiment above, for the liquid supply step of densification, a volatile liquid is supplied to the CNT laminate 4 wound around the roller 20, but the present invention is not limited to this, and the CNT laminate 4 can be removed from the roller 20 and then the volatile liquid can be sprayed on the CNT laminate 4, or the CNT laminate 4 can be immersed in the volatile liquid. In this case as well, similarly to the above case, fine particles can be dispersed, or metal salt and/or resin material can be dissolved in the volatile liquid.

In the embodiment above, for the pressing step of densification, the CNT laminate 4 wound around the roller 20 is pressed, but the present invention is not limited to this, and CNT laminate 4 can be removed from the roller 20, and then pressed.

In the embodiment above, the volatile liquid is supplied to the CNT laminate 4, and then the CNT laminate 4 is pressed, but the present invention is not limited to this, and the CNT laminate 4 can be pressed, and the volatile liquid can be supplied to the CNT laminate 4. In the method for producing the CNT twisted yarn 100, for the densification, one of the volatile liquid supply to the CNT laminate 4 (liquid supply step) and pressing (pressing step) can be included, or densification does not have to be included.

When the method for producing the CNT twisted yarn 100 includes only one of the volatile liquid supply to the CNT laminate 4 (liquid supply step) and pressing (pressing step) as densification, the stacking unit 32 of the twisted yarn production device 30 includes one of the spraying device 24 and the pressure roller 21. When the method for producing the CNT twisted yarn 100 does not include densification, the twisted yarn production device 30 does not have to include the spraying device 24 or the pressure roller 21.

In the embodiment above, after completing winding of the CNT laminate 4 to the roller 20, the liquid supply step and pressing step are conducted, but it is not limited thereto.

For example, when the CNT web 3 is wound around the circumferential face of the roller 20, the volatile liquid can be supplied. In this case, the CNT web 3 to which the volatile liquid was supplied was wound around the circumferential face of the roller 20 sequentially and stacked. That is, the stacking step and the liquid supply step are conducted simultaneously. The volatile liquid can be supplied to the CNT laminate 4 in this manner as well.

Pressing can be conducted when the CNT web 3 is wound around the circumferential face of the roller 20. In this case, the CNT web 3 is pressed when it is wound around the circumferential face of the roller 20 and stacked sequentially. That is, the stacking step and the pressing step are conducted simultaneously. The CNT laminate 4 can be pressed in stacking direction in this manner as well.

These modified examples also achieve the operations and effects of the above-described embodiments.

These embodiments and modified examples can be suitably combined.

### [Examples]

The present invention is further described in detail based on EXAMPLES below. However, the present invention is not limited to Examples. The specific numerical values of mixing ratio (content), physical property value, and parameter used in the description below can be replaced with the upper limit values (numerical values defined with "or less" or "below") or lower limit values (numerical values defined with "or more" or "more than") of the corresponding numerical values of mixing ratio (content), physical property value, and parameter described in "DESCRIPTION OF EMBODIMENTS" above.

### (Example 1)

A silicon dioxide film was stacked on the surface of a stainless steel-made substrate (stainless steel substrate), and thereafter iron was vapor deposited on a silicon dioxide film as a catalyst layer.

Subsequently, the substrate was heated to a predetermined temperature. A source gas (acetylene gas) was supplied to the catalyst layer. In this manner, VACNTs having a substantially rectangular shape in plan view were formed on the substrate.

In the VACNTs, the plurality of CNTs extend so as to be substantially parallel to each other, and are aligned (vertically aligned) orthogonal to the substrate. The CNT was a multi-walled carbon nanotube, the CNT had an average external diameter of 10 nm and an average length of about 300 µm, and the VACNTs had a bulk density of 50 mg/cm³.

Then, the plurality of CNTs positioned at the front end portion in the VACNTs are held at once in the entire width with a drawing device, and pulled toward the front side. In this manner, the CNT web composed of the plurality of CNT single yarns is drawn from the VACNTs.

Then, the distal end (downstream end portion in drawing direction) of the CNT web is fixed to the circumferential face of the roller having a diameter of 60 mm, and the roller is rotated at 30 rpm for 7 minutes. In this manner, the CNT web is drawn from the VACNTs continuously, and wound around the circumferential face of the roller 210 times.

Then, the CNT web wound around was cut in the axial direction of the roller and unwound, and removed from the roller. In this manner, the CNT laminate in which a plurality of CNT webs are stacked (number of stacking: 210) was produced. The CNT laminate had a length (longitudinal direction length) of 190 mm.

Then, ethanol was sprayed over the CNT laminate, and then dried at 60°C to highly densify the CNT laminate. The densified CNT laminate had a thickness of 10 µm, and a bulk density of 0.52g/cm³.

Then, the densified CNT laminate was cut to a width of 5 mm along the extension direction of the CNT single yarn. That is, the CNT laminate that was cut had a ratio of width direction length to the thickness of (width/thickness) 5000.

Then, the CNT laminate that was cut was made into a twisted yarn with less than 10000T/m. The CNT twisted yarn was produced in this manner. The CNT twisted yarn had a diameter of 140 µm and a bulk density of 1.62g/cm³.

The configuration of the CNT laminate and CNT twisted yarn (number of stacking, size, bulk density, etc.) of Examples 1 to 14, Comparative Examples 1 and 2, and if densification was conducted are shown in Table 1.

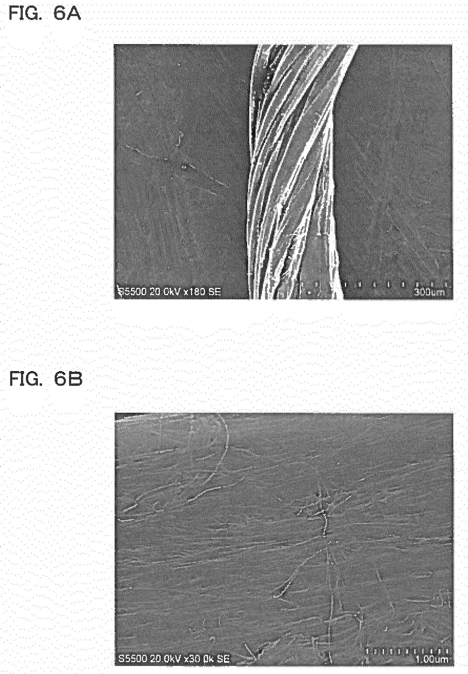

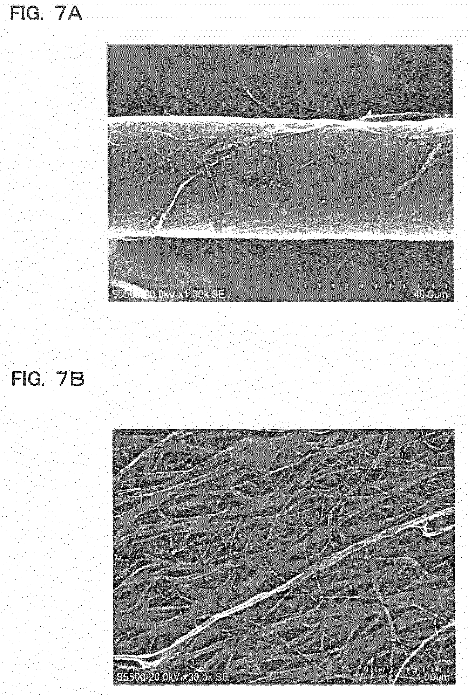

SEM images of the CNT twisted yarn in Example 1 are shown in FIG. 6A and FIG. 6B, and SEM images of the CNT twisted yarn of Comparative Example 1 are shown in FIG. 7A and FIG. 7B.

### (Example 2)

The CNT laminate and CNT twisted yarn were produced in the same manner as in Example 1, except that the CNT web was wound around the circumferential face of the roller 100 times, and the CNT laminate was not sprayed with ethanol.

### (Example 3)

The CNT web was wound around the circumferential face of the roller 100 times in the same manner as in Example 1, and then the CNT web wound around the roller was sprayed with ethanol. Thereafter, it was dried at 60°C to densify the CNT web.

Then, in the same manner as in Example 1, the CNT web was removed from the roller, thereby producing a CNT laminate (number of stacking: 100). Then, the CNT twisted yarn was prepared from the CNT laminate.

### (Example 4)

A CNT laminate (number of stacking: 100) was produced in the same manner as in Example 3. Thereafter, the CNT laminate was immersed in an ethanol solution of 0.5 mol/L cobalt nitrate for 60 seconds. Then, the CNT laminate was taken out from the ethanol solution of Co (NO₃)₂ and dried at 60°C.

Then, in the same manner as in Example 1, the CNT twisted yarn was produced from the CNT laminate.

### (Example 5)

The CNT web was wound around the circumferential face of the roller 100 times in the same manner as in Example 1, and then the CNT web wound around the roller was sandwiched by the roller and the pressure roller (diameter 20 mm), and the roller was rotated, to apply a pressure of 10kg/cm².

Then, the CNT web was removed from the roller in the same manner as in Example 1, and the CNT laminate (number of stacking: 100) was produced. Then, the CNT twisted yarn was prepared from the CNT laminate.

### (Example 6)

A CNT laminate and a CNT twisted yarn were produced in the same manner as in Example 5, except that the CNT web was not wound around the circumferential face of the roller 200 times.

### (Example 7)

Ethanol was sprayed to the CNT web wound around the roller in the same manner as in Example 3. Then, in the same manner as in Example 5, a pressure of 10kg/cm² was applied to the CNT web wound around the roller. Thereafter, it was dried at 60°C.

Then, in the same manner as in Example 1, the CNT web was removed from the roller, thereby producing a CNT laminate (number of stacking: 100). Then, a CNT twisted yarn was prepared from the CNT laminate.

### (Example 8)

A CNT laminate and a CNT twisted yarn were produced in the same manner as in Example 7, except that the CNT web was wound around the circumferential face of the roller 50 times.

### (Example 9)

A CNT laminate and a CNT twisted yarn were produced in the same manner as in Example 7, except that the CNT web was wound around the circumferential face of the roller 200 times.

### (Example 10)

A CNT laminate and a CNT twisted yarn were produced in the same manner as in Example 7, except that the CNT web was wound around the circumferential face of the roller 400 times.

### (Example 11)

A CNT laminate and a CNT twisted yarn were produced in the same manner as in Example 7, except that the CNT web was wound around the circumferential face of the roller 10 times.

### (Example 12)

A CNT laminate and a CNT twisted yarn were produced in the same manner as in Example 7, except that the CNT web was wound around the circumferential face of the roller 500 times.

### (Comparative Example 1)

VACNTs having a substantially rectangular shape in plan view were produced in the same manner as in Example 1, and a CNT web composed of the plurality of CNT single yarns was drawn from the VACNTs.

Then, the CNT web was drawn continuously from the VACNTs, and was made into a twisted yarn with 1000T/m. The CNT twisted yarn was produced in this manner. Thereafter, ethanol was sprayed to the CNT twisted yarn, and dried at 60°C.

### (Comparative Example 2)

VACNTs having a substantially rectangular shape in plan view were formed in the same manner as in Example 1, and the VACNTs were separated from the substrate with a cutter. Then, the separated VACNTs were formed into a sheet with a known pressing, thereby preparing a press molded sheet. The press molded sheet had a thickness of 10 µm, and a bulk density of 1.0g/cm³. When the press molded sheet was twisted, it was broken and could not be made into a twisted yarn.

### Evaluation:

### (1) Handleability

Handleability of the CNT laminate produced in Examples and Comparative Examples was evaluated based on the criteria below.
GOOD: effects from wind were limited, easily held and smoothly twisted.
Fair: slightly affected by wind, sometimes unstably held and twisted.
BAD: affected by wind, difficult to be held and twisted.

The results are shown in Table 1.

### (2) Tensile strength

Tensile strength of the CNT laminate and the CNT twisted yarn produced in Examples and Comparative Examples was measured as described below. The results are shown in Table 1. The press molded sheet of Comparative Example 2 had a tensile strength of 15MPa.

One end of the CNT twisted yarn is fixed, and the other end of the CNT twisted yarn was fixed to a force gauge, and pulled up at 0.2 mm/sec. The load at which rupture was caused was regarded as breaking strength. The breaking strength was divided by a cross sectional area of the CNT twisted yarn to calculate tensile strength.

Breaking strength of the CNT laminate was measured in the same manner as the CNT twisted yarn to calculate tensile strength.

### (3) Electric resistance

Electric resistance of the CNT laminate and the CNT twisted yarn produced in Examples and Comparative Examples was measured with an electric resistance measurement device (trade name: Loresta MCP-FP, manufactured by Mitsubishi Chemical Analytech Co.,Ltd.). The results are shown in Table 1.

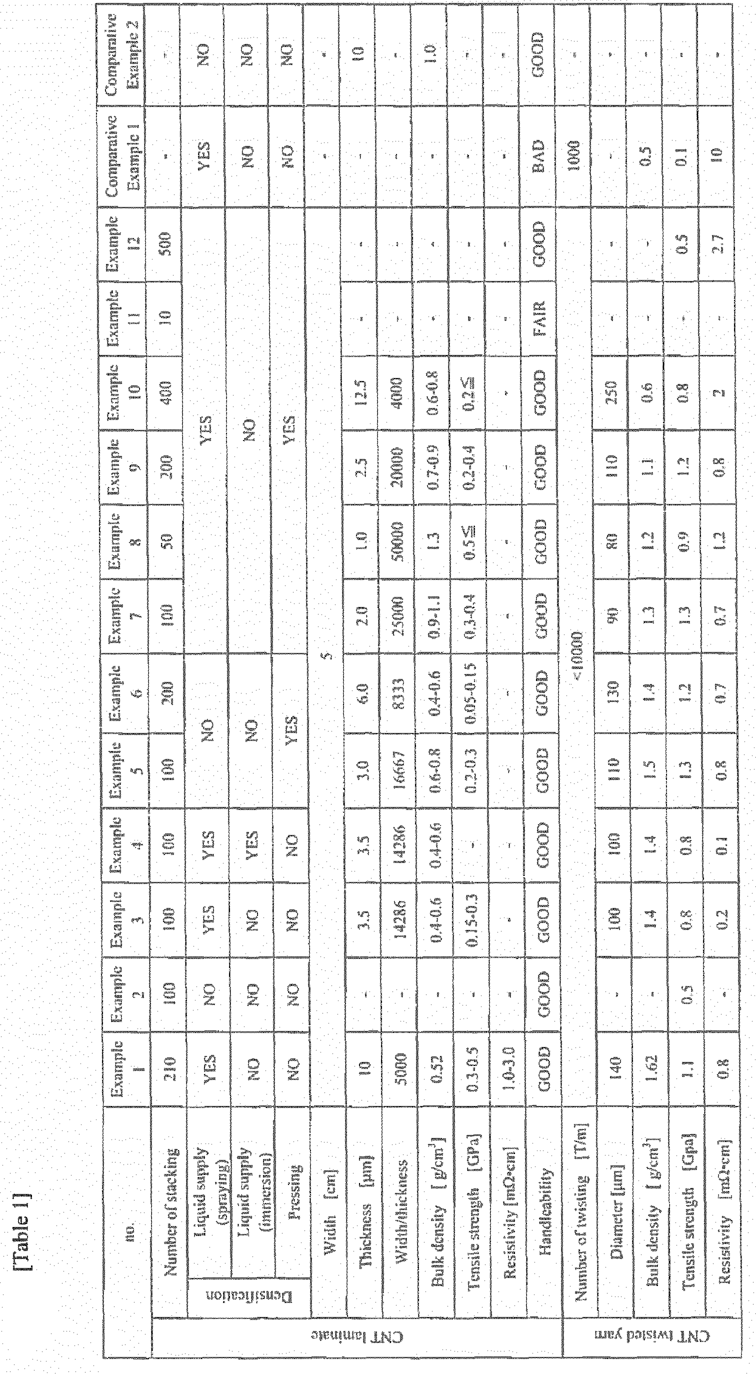

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### [INDUSTRIAL APPLICABILITY]

The method for producing a carbon nanotube twisted yarn of the present invention can be suitably used for production of a carbon nanotube twisted yarn, which is used in various industrial products. The carbon nanotube twisted yarn of the present invention can be suitably used in various industrial products.

### [DESCRIPTION OF REFERENCE NUMERALS]

- 1: substrate
- 2: vertically-aligned carbon nanotube
- 3: carbon nanotube web
- 4: CNT laminate
- 10: carbon nanotube
- 20: roller
- 100: carbon nanotube twisted yarn

## Claims

1. A method for producing a carbon nanotube twisted yarn, the method including the steps of:
preparing a vertically-aligned carbon nanotube that is disposed on a substrate and is aligned vertically to the substrate,
drawing a plurality of carbon nanotube single yarns from the vertically-aligned carbon nanotube, and arranging the plurality of carbon nanotube single yarns in parallel to prepare a carbon nanotube web,
forming a laminate by stacking the carbon nanotube web in a plural number so that the plurality of carbon nanotube single yarns are extended in parallel, and
twisting the laminate.

2. The method for producing a carbon nanotube twisted yarn according to Claim 1, wherein
in the step of stacking the carbon nanotube web, the carbon nanotube web is wound around a circumferential face of a roller a plurality of times, and the carbon nanotube web wound around was cut in the axial direction of the roller to separate the laminate from the roller.

3. The method for producing a carbon nanotube twisted yarn according to Claim 1, further including a step of
supplying a volatile liquid to the laminate before twisting the laminate.

4. The method for producing a carbon nanotube twisted yarn according to Claim 3, wherein
fine particles are dispersed or metal salt and/or resin material is dissolved in the liquid.

5. The method for producing a carbon nanotube twisted yarn according to Claim 1, further including a step of
pressing the laminate in the stacking direction of the carbon nanotube web before twisting the laminate.

6. A carbon nanotube twisted yarn comprising a twisted laminate, wherein
the twisted laminate has stacked carbon nanotube webs, and
each of the carbon nanotube webs has a plurality of carbon nanotube single yarns which are arranged in parallel.
